# EUROPEAN PATENT APPLICATION

(11) **EP 4 764 796 A1**
(43) Date of publication of application: **24.06.2026**
(21) Application number: 24853816.7
(22) Date of filing: 14.08.2024
(51) Int. Cl.: G06F 3/048

(54) **MEDIA CONTENT PROCESSING METHOD AND DEVICE, AND STORAGE MEDIUM AND PROGRAM PRODUCT**

(30) Priority: 14.08.2023 CN 202311024778
(71) Applicant: Beijing Zitiao Network Technology Co., Ltd., Beijing 100190 (CN)
(72) Inventor: MING, Chaoping, Beijing 100028 (CN); WEN, Wenwen, Beijing 100028 (CN)
(74) Representative: Marks & Clerk LLP
(86) International application number: PCT/CN2024/112089
(87) International publication number: WO 2025/036409

(57) **Abstract**

Provided in the embodiments of the present disclosure are a media content processing method and device, and a storage medium and a program product. The media content processing method comprises: displaying dialogue content in a dialog window of a first interface, wherein the dialogue content is used for indicating an editing intent of a user for media content to be processed, and the first interface comprises an editing track, an editing effect preview area and the dialog window, the editing track being configured to present a video clip formed on the basis of said media content, and the editing effect preview area being configured to play the video clip formed on the basis of said media content; and on the basis of the dialogue content, editing said media content, so as to obtain target media content, wherein the target media content comprises said media content and editing information. The embodiments of the present disclosure reduce the learning cost of a target user, have simple operations, and increase the level of intelligence of media content generation.

## Description

The present application claims priority to Chinese Patent Application No. 202311024778.1, filed on August 14, 2023, which is incorporated herein by reference in its entirety as a part of the present application.

### TECHNICAL FIELD

Embodiments of the present disclosure relate to a media content processing method and device, a storage medium, and a program product.

### BACKGROUND

In media content editing software, functional controls for editing media content are provided at fixed positions on an editing page. During editing, users need to be familiar with the positions of these functional controls and master their operation methods, resulting in complex operations, high learning costs, and a low level of intelligence, making it unfavorable for user operations.

### SUMMARY

Embodiments of the present disclosure provide a media content processing method and device, a storage medium, and a program product.

According to a first aspect, an embodiment of the present disclosure provides a media content processing method. The method includes:
displaying dialog content in a dialog window of a first interface, where the dialog content is used to indicate an editing intention of a user for media content to be processed, and the first interface includes an editing track, an editing effect preview area, and the dialog window, the editing track being configured to present a video clip formed based on the media content to be processed, and the editing effect preview area being configured to play the video clip formed based on the media content to be processed;
editing the media content to be processed based on the dialog content to obtain target media content, where the target media content includes the media content to be processed and editing information, and the editing information is used to indicate an editing operation performed on the media content to be processed; and presenting, on the editing track, a video clip formed based on the target media content.

According to a second aspect, an embodiment of the present disclosure provides a media content processing device. The device includes:
a display module configured to display dialog content in a dialog window of a first interface, where the dialog content is used to indicate an editing intention of a user for media content to be processed, and the first interface includes an editing track, an editing effect preview area, and the dialog window, the editing track being configured to present a video clip formed based on the media content to be processed, and the editing effect preview area being configured to play the video clip formed based on the media content to be processed; and
an editing module configured to edit the media content to be processed based on the dialog content to obtain target media content, where the target media content includes the media content to be processed and editing information, and the editing information is used to indicate an editing operation performed on the media content to be processed.

The display module is further configured to present, on the editing track, a video clip formed based on the target media content.

According to a third aspect, an embodiment of the present disclosure provides an electronic device. The electronic device includes a processor and a memory.

The memory stores computer-executable instructions.

The processor executes the computer-executable instructions stored in the memory, to cause the at least one processor to perform the media content processing method according to the first aspect and various possible designs of the first aspect.

According to a fourth aspect, an embodiment of the present disclosure provides a computer-readable storage medium. The computer-readable storage medium stores computer-executable instructions that, when executed by a processor, cause the media content processing method according to the first aspect and various possible designs of the first aspect to be implemented.

According to a fifth aspect, an embodiment of the present disclosure provides a computer program product including a computer program that, when executed by a processor, causes the media content processing method according to the first aspect and various possible designs of the first aspect to be implemented.

### BRIEF DESCRIPTION OF DRAWINGS

In order to describe the technical solutions in the embodiments of the present disclosure more clearly, the accompanying drawings required for describing the embodiments will be briefly described below. Apparently, the accompanying drawings in the following description are some embodiments of the present disclosure, and those of ordinary skill in the art may still derive other accompanying drawings from these accompanying drawings without creative efforts.
FIG. 1 is a schematic flowchart of a media content processing method according to an embodiment of the present disclosure;
FIG. 2 is a schematic diagram of interaction in a media content processing method according to an embodiment of the present disclosure;
FIG. 3a to FIG. 3d are schematic diagrams of an interface of dialog content for music changing editing according to an embodiment of the present disclosure;
FIG. 4a to FIG. 4d are schematic diagrams of an interface of dialog content for background changing editing according to an embodiment of the present disclosure;
FIG. 5 is a structural block diagram of a media content processing device according to an embodiment of the present disclosure; and
FIG. 6 is a schematic structural diagram of hardware of a media content processing device according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

Regarding the above-mentioned problems of high difficulty in operation and low level of intelligence in the media content editing method, the inventor of the present disclosure has found through research that an editing intention of a user may be determined using a human-computer dialog approach, and then media content to be processed may be edited based on the editing intention to obtain target media content. On this basis, an embodiment of the present disclosure provides a media content processing method.

The media content processing method according to the present disclosure may be implemented by an electronic device, an application (APP) in the electronic device, a web page, etc. The electronic device may include a mobile phone, a tablet computer, a wearable electronic device, an in-vehicle device, an augmented reality (AR) device/a virtual reality (VR) device, a laptop computer, an ultra-mobile personal computer (UMPC), a netbook, a personal digital assistant (PDA), a smart television, a smart screen, a high-definition television, a 4K television, a smart speaker, a smart projector, or another smart home device. The embodiments of the present disclosure do not impose any limitation on the specific type of the electronic device. The embodiments of the present disclosure do not limit the type of an operating system of the electronic device, for example, an Android system, a Linux system, a Windows system, or an iOS system.

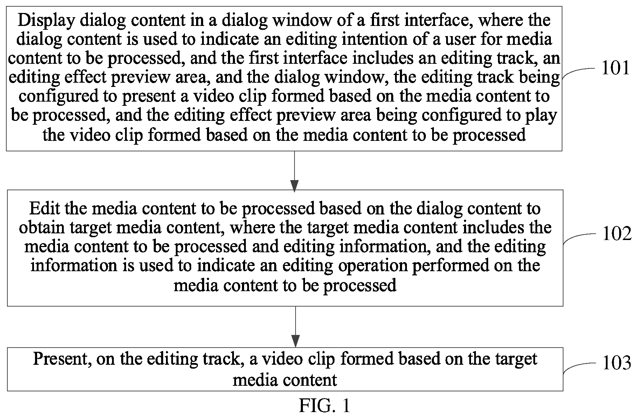

Reference is made to FIG. 1. FIG. 1 is a schematic flowchart of a media content processing method according to an embodiment of the present disclosure. The media content processing method includes the following steps.

101: Display dialog content in a dialog window of a first interface, where the dialog content is used to indicate an editing intention of a user for media content to be processed, and the first interface includes an editing track, an editing effect preview area, and the dialog window, the editing track being configured to present a video clip formed based on the media content to be processed, and the editing effect preview area being configured to play the video clip formed based on the media content to be processed.

In a specific implementation, the media content to be processed may be imported into the editing track of the first interface, and then an initial editing effect of the media content to be processed may be viewed in the editing preview area. In a subsequent process of editing the media content to be processed based on the dialog content, edited media content to be processed may be presented in real time on the editing track, so that an editing effect of the edited media content to be processed can be viewed in real time in the editing preview area.

For example, after a background changing editing operation is performed on the media content to be processed based on the dialog content, an editing effect of media content to be processed with a changed background can be viewed in the editing effect preview area. Then, after a music changing editing operation is performed, an editing effect of media content to be processed with changed music can be viewed in real time. Therefore, it is convenient for the user to input dialog information for a next editing operation based on the editing effect presented in the editing effect preview area.

The media content to be processed may be an original material (e.g., an image or a video material). Accordingly, the video clip formed based on the media content to be processed may contain one or more frames of images, may refer to a video, or may be a video draft pre-generated based on the original material (e.g., the image or the video material). The video draft includes the original material and editing information, and the editing information is used to indicate an editing operation performed on the original material. In an embodiment of the present disclosure, the content to be processed is the video material. Before displaying the dialog content in the dialog window of the first interface, the method further includes: obtaining the video material; and presenting, on the editing track, a video clip formed based on the video material. The media content to be processed is edited based on the dialog content to obtain target media content, including: editing the video material based on the dialog content to obtain the video draft, where the video draft includes the video material and editing information, and the editing information is used to indicate the editing operation performed on the video material.

In addition, the dialog content may include user dialog information from the user, and may further include system dialog information from a system. Dialog information may include a text, a number, a symbol, a link, an emoji, an image, audio, a video clip, and other types of data. This is not limited. Display parameters such as sizes, colors, display positions, and display transparencies of the editing effect preview area, the editing track, and the dialog window are not limited.

The user dialog information may be input in various manners.

In an implementable manner, in order to help guide a user with less editing experience, an operation control may be displayed within the first interface, so that the user can express the editing intention by triggering the operation control. Specifically, the dialog content may include first user dialog information, and the media content processing method may further include: displaying a target functional control within the first interface; and generating, in response to a touch operation acting on the target functional control, the first user dialog information corresponding to the target functional control.

The target functional control may be a control for aspect ratio changing, music changing, intelligent copy addition, material replacement, filter adjustment, effect addition, or the like. The target functional control may be displayed in the form of an icon, a text, a symbol, an image, or the like, or may be displayed by combining a plurality of forms. This is not limited in the present disclosure.

In another implementable manner, in order to improve flexibility of inputting the user dialog information by the user, an input area may be provided in the first interface, so that the user can input the user dialog information in the input area. Specifically, the dialog content may include second user dialog information, the first interface may include a dialog input area, and the media content processing method may further include: obtaining the second user dialog information in response to an input operation acting on the dialog input area. This embodiment of the present disclosure does not limit display parameters such as a size, a color, a display position, and a display transparency of the input area.

In yet another implementable manner, in order to expand user's editing ideas, editing suggestion information may be presented in the dialog window of the first interface, so that the user can input the user dialog information based on the editing suggestion information. The editing suggestion information may be determined based on the media content to be processed. For example, if the media content to be processed includes background music, an editing suggestion of changing the music may be provided.

It should be noted that the above various manners for inputting the user dialog information may be implemented separately or in any combination. This is not limited in this embodiment of the present disclosure.

Dialog information from different objects in the dialog content may be arranged either on the same side or on different sides. For example, the user dialog information from the user may be arranged on a right side of the dialog window and aligned to the right side, and the system dialog information from the system may be arranged on a left side of the dialog window and aligned to the left side. Alternatively, the dialog information from both parties may be aligned to the left side or the right side. This is not limited in this embodiment of the present disclosure.

102: Edit the media content to be processed based on the dialog content to obtain the target media content, where the target media content includes the media content to be processed and editing information, and the editing information is used to indicate an editing operation performed on the media content to be processed.

Specifically, after the dialog content is obtained, the editing intention in the dialog content may be identified, and the media content to be processed may be edited based on the editing intention to obtain the target media content.

For example, the identification may be performing natural language processing on the dialog content to obtain a plurality of labels that represent a creation intention. A corresponding operation control (e.g., for background changing, music changing, or effect addition) and a parameter to be edited (e.g., parameters such as a style, a color, and a composition of a background, parameters such as an author, lyrics, and a cover of music, or parameters such as a candidate style and a position for effect addition) are determined based on the plurality of labels. Then, the parameter is adjusted based on the operation control to obtain the target media content. The target media content may be a video, an image-text, an image, or other types of data.

For example, the user may input user dialog information "Change the background to a blue sky and white clouds for me", and the system may perform natural language processing on the dialog message to determine an editing intention of the user, and then invoke two related components, for example, a matting component and an alternative background selection component. The matting component is configured to matte an object such as people and scenery other than the background in the editing content to be processed. The alternative background selection component is configured to provide, in the dialog window, the user with a card (control) including a plurality of candidate backgrounds for replacement. Further, the system may receive a selection operation of the user on a candidate background, and composite the selected candidate background and a matting result to realize the editing intention of changing the background to a blue sky and white clouds to obtain the target media content.

In a case of a plurality of components (cards), an execution sequence of the components may be determined in various manners. For example, a sequence of different cards may be preset, and then the cards are executed in sequence. Specifically, a parameter may be set for each card. The parameter is a first value during execution of the card. The parameter is a second value after execution of the card, and at this time, the component can neither execute any logic, nor output any renderable content.

103: Present, on the editing track, a video clip formed based on the target media content.

Specifically, after the target media content is generated, for ease of viewing an editing effect of the target media content, the video clip formed based on the target media content may be presented on the editing track.

As can be seen from the above descriptions, in the media content processing method according to the present disclosure, information is exchanged between the user and the system by using a dialog, and then editing content to be processed is edited based on the obtained dialog content representing the editing intention of the user to obtain the target editing content. This reduces learning costs of a target user, ensures simplicity in operation, and improves a level of intelligence in media content generation.

In an embodiment of the present disclosure, on the basis of the embodiment in FIG. 1, the media content processing method further includes: presenting the media content to be processed on the editing track; obtaining a current position of a preview pointer on the editing track, where the preview pointer is used to move along the editing track; and determining an editing position of the media content to be processed based on the current position. Editing the media content to be processed based on the dialog content includes: editing, based on the dialog content, a material in the media content to be processed that corresponds to the editing position.

Specifically, a creation page of an application may present covers of a plurality of video drafts. By clicking on a cover, the first interface may be input, and a video draft corresponding to the cover is imported into the editing track of the first interface. In this way, an editing effect of a video clip formed based on the video draft can be viewed in the editing effect preview area, and a position of the preview pointer on the editing track may be changed to position an image in the editing effect preview area to an image frame to be edited corresponding to the position of the preview pointer. Therefore, the image frame to be edited may be edited using a human-computer dialog in the dialog window.

In an embodiment of the present disclosure, on the basis of the embodiment in FIG. 1, editing the media content to be processed based on the dialog content may include: determining the editing intention based on the dialog content; determining an editing tool and an editing parameter based on the editing intention; and editing the media content to be processed through the editing tool based on the editing parameter.

Specifically, natural language processing may be performed on the dialog content to obtain the editing intention of the user through identification, and the corresponding editing tool and the corresponding editing parameter may be determined based on the editing intention. Then, the parameter is adjusted based on the operation control to obtain the target media content. The target media content may be a video, an image-text, an image, or other types of data.

The editing tool refers to a UI component, for example, may be a component of React, i.e., an encapsulated UI part with an independent function, for example, editing controls for background changing, music changing, and effect addition. The editing parameter refers to an editing parameter used by the editing tool during editing, for example, parameters such as the style, the color, and the composition of the background, parameters such as the author, the lyrics, and the cover of the music, and parameters such as the candidate style and the position for effect addition.

In an embodiment of the present disclosure, the dialog content may include the user dialog information and the system dialog information. The editing intention is obtained through intention identification on the user dialog information on the one hand and analysis on a touch operation of the user on an operation control provided in the system dialog information on the other hand. Specifically, determining the editing intention based on the dialog content may include: determining a first editing intention in the editing intention based on fourth user dialog information in the dialog content; and determining, based on the first editing intention, an operation control and an editing parameter corresponding to the operation control. Accordingly, editing the media content to be processed through the editing tool based on the editing parameter may include: displaying the operation control in the dialog window of the first interface; and adjusting the editing parameter in response to a touch operation acting on the operation control to obtain a target editing parameter, and editing the media content to be processed through the editing tool based on the target editing parameter.

In an embodiment of the present disclosure, in order to save computing power resources of a terminal device, an intention identification step may be performed by a server. Specifically, determining the first editing intention in the editing intention based on the fourth user dialog information in the dialog content may include: sending the fourth user dialog information to the server, so that the server performs natural language processing on the fourth user dialog information to obtain a corresponding editing intention, assembles and generates an answer script based on the editing intention, and sends the answer script to a client, where the answer script includes a function and a parameter keyword corresponding to the function. Determining, based on the first editing intention, the operation control and the editing parameter corresponding to the operation control may include: receiving the answer script; determining, based on the answer script, an operation control corresponding to the function; and determining a corresponding editing parameter based on the parameter keyword.

Specifically, the parameter keyword is a basic instruction keyword, and in order to obtain the editing parameter, the client needs to request for an interface and perform assembly and rendering. For example, for a music card, the answer script only passes the keyword parameter, and does not pass information such as a label icon, a theme title, and music identifier musicID, and the client needs to request for the interface and perform assembly and rendering based on the instruction keyword.

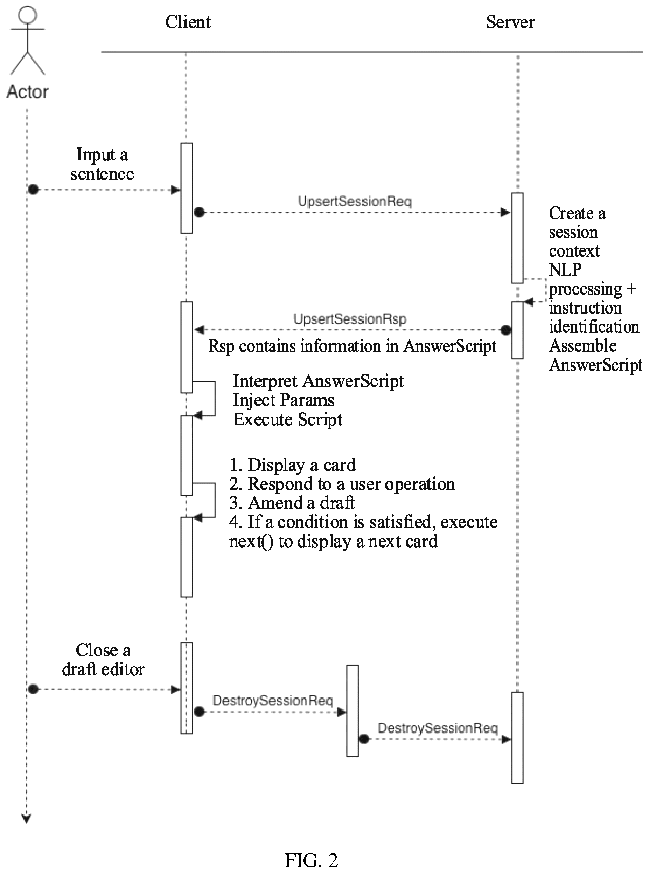

For example, as shown in FIG. 2, an example in which the editing content to be processed is a video draft is used. The user inputs a sentence (user dialog information) in the dialog window of the first interface of the client. The client sends a session insertion request (UpsertSessionReq) to the server based on the input sentence. After receiving the request, the server creates a session context, performs natural language processing (NLP) on the input sentence carried by the session insertion request, obtains an editing intention through identification, determines an editing tool (a UI component) based on the editing intention, then obtains an answer script AnswerScript through assembly, and sends a session insertion response UpsertSessionRsp to the client based on the answer script. The session insertion response includes information in the answer script. The client interprets the answer script, injects an editing parameter Params, and then executes a script Script. During execution of the script, a card of a component included in the script is displayed in the dialog window. A touch operation (a click or long-press) of the user is received, the editing parameter is adjusted in response to the touch operation, and the video draft is edited based on an adjusted editing parameter. It is determined whether a preset condition is satisfied, and if the preset condition is satisfied (for example, execution of a previous card is finished), a card of a next component is executed. If an editing effect after a plurality of sessions meets a requirement of the user, the user may trigger a closing operation in the first interface of the client to close a draft editor, i.e., the first interface, and the client sends a session destroy request DestroySessionReq to the server based on the closing instruction.

In an embodiment of the present disclosure, in order to better guide the user to perform an editing operation, after the editing intention is determined based on the user dialog information, an operation control for a current editing operation and recommendation information for a next editing operation may be determined based on the editing intention. Specifically, after determining the first editing intention in the editing intention based on the user dialog information in the dialog content, the method may further include: determining recommendation information for a next editing operation based on the first editing intention; and displaying the recommendation information for the next editing operation in the dialog window of the first interface, so that the user inputs fifth user dialog information based on the recommendation information for the next editing operation, where the fifth user dialog information is used to indicate a second editing intention in the editing intention.

Specifically, a plurality of pieces of user dialog information input by the user may be displayed in the dialog window of the first interface, and one editing intention may be identified based on each piece of user dialog information. These editing intentions collectively constitute the editing intention corresponding to the user dialog information. Certainly, if the dialog content also includes the system dialog information, the system dialog information may include the operation control and the editing parameter determined based on the editing intention determined based on the user dialog information. In this case, an editing intention of the user determined based on the system dialog information may be obtained based on the touch operation on the operation control in the system dialog information.

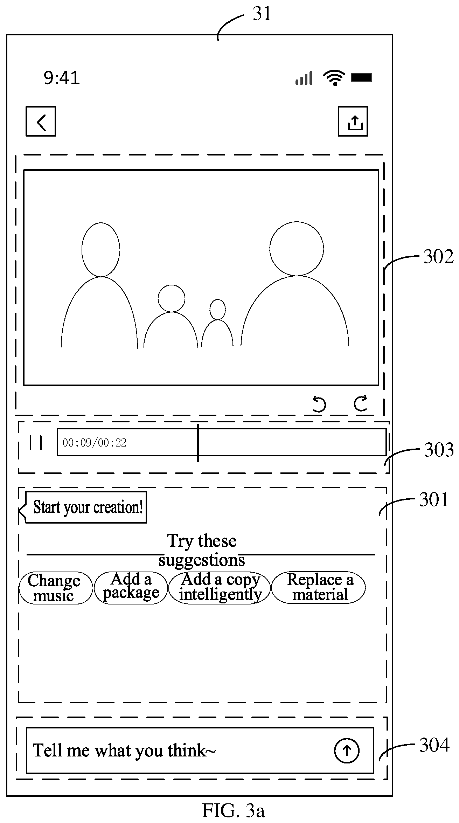

The following describes an example of a music changing editing process with reference to FIG. 3a to FIG. 3d.

After the application (a media content editing application) is started, a user interface 31 shown in FIG. 3a may be displayed on a mobile phone. The user interface 31 is a dialog-driven editing page (i.e., a first interface) that is mainly used to present and obtain dialog content between a user and a system, and perform editing based on the dialog content to obtain target media content.

Referring to FIG. 3a, the user interface 31 includes a dialog window 301, a user preview area 302, an editing track 303, and a dialog input area 304. An image of a video editing frame of media content to be processed that is indicated by a preview pointer is displayed in the user preview area 302. The editing track 303 includes the preview pointer for indicating an editing position. Some operation suggestions, i.e., "Change music", "Add a package", "Add a copy intelligently", and "Replace a material", provided for the media content to be processed, are displayed in the dialog window 301. The dialog input area 304 is used to input user dialog information. The user may input the user dialog information in the dialog input area 304 based on the suggestions, to indicate an editing intention. For example, it is assumed that the user wants to perform editing for "Change music".

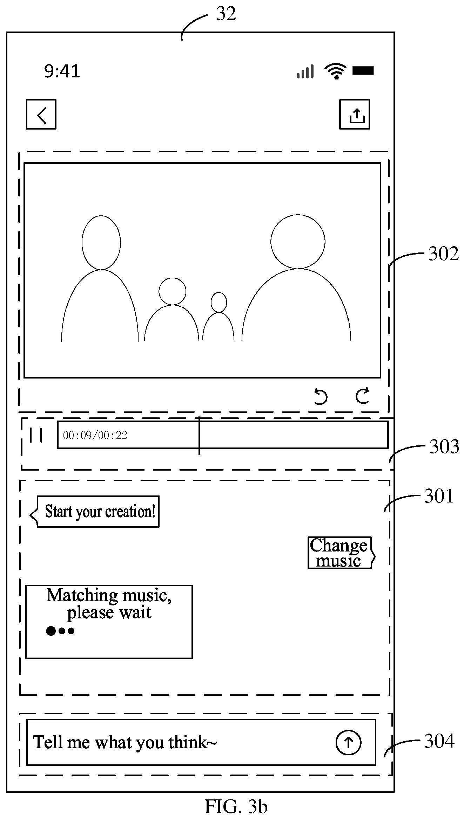

Referring to FIG. 3b, user dialog information "Change music" input by the user is displayed in the dialog input area 304 of a user interface 32. The system obtains the user dialog information, performs intention identification on the user dialog information, and determines, based on an identified editing intention, an operation control and an editing parameter for a current operation, to display the operation control in the dialog window. The editing parameter may be adjusted through a touch operation of the user on the operation control.

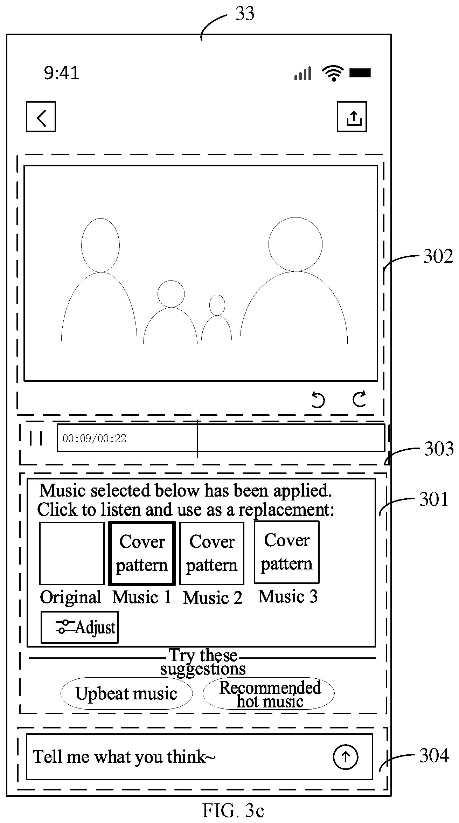

Referring to FIG. 3c, system dialog information fed back by the system based on the user dialog information "Change music" input by the user is displayed in the dialog input area 304 of a user interface 33. The system dialog information includes the operation control for the current operation determined based on the editing intention of the user. As shown in FIG. 3c, the operation control includes a plurality of editing parameters such as candidate music (Original, Music 1, Music 2, and Music 3) for the user to select. In addition, the system dialog information further includes an adjustment control and an editing parameter corresponding to the adjustment control. In addition, suggestion information "Upbeat music" and "Recommended hot music" for a next operation is further displayed below the system dialog information. The suggestion information may be determined by the system based on the editing intention of the user dialog information "Change music". In other words, based on the editing intention, both the operation control for the current operation and the recommendation information for the next operation are determined. Based on this, it is more advantageous for the user to perform subsequent editing efficiently.

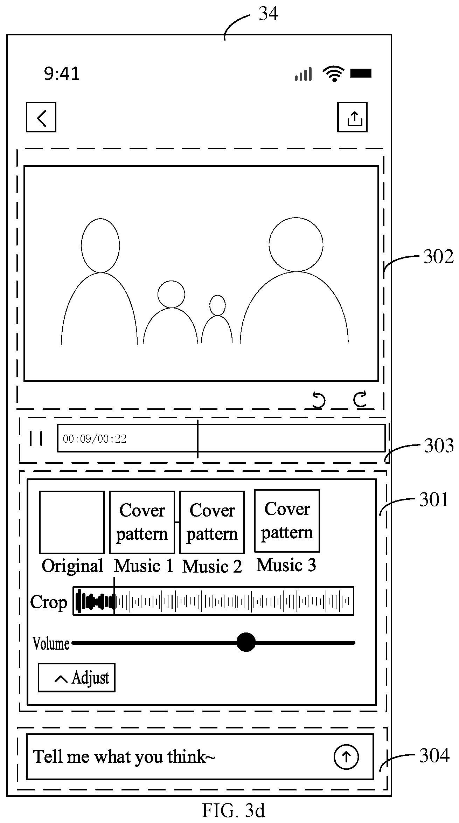

Referring to FIG. 3d, a touch operation (a click or long-press) of the user on the adjustment control is received. In response to the touch operation, further operation controls "Crop" and "Volume" are displayed in the dialog input area 304 of the user interface 32 for clip selection and volume adjustment.

FIG. 3b to FIG. 3d further include the user preview area 302, the editing track 303, and the dialog input area 304. For descriptions of the areas, reference may be made to FIG. 3a, and details are not described herein again.

It should be noted that the embodiment shown in FIG. 3a to FIG. 3d is merely an example of the media content processing method according to the embodiments of the present disclosure. In an actual scenario, a display manner and a presentation form of the dialog content, a setting manner of a related control for the dialog content, layouts and display parameters of some pages, and implementations of controls and entries can be flexibly set as required.

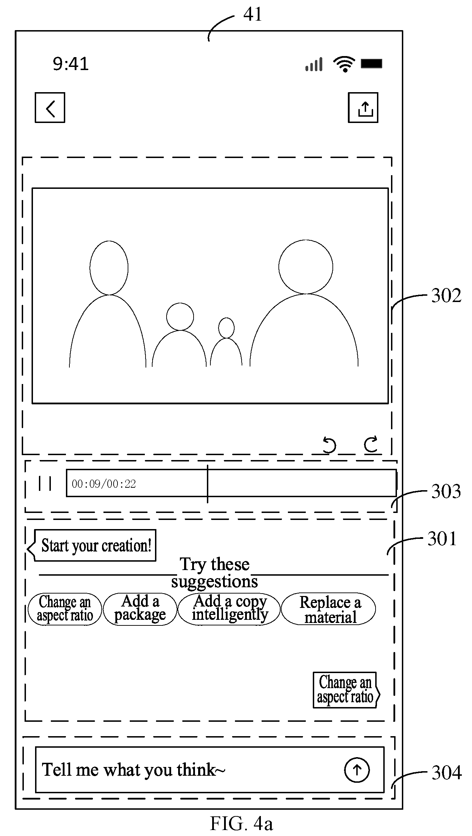

The following describes an example of a background changing editing process with reference to FIG. 4a to FIG. 4d.

After the application (a media content editing application) is started, a user interface 41 shown in FIG. 4a may be displayed on a mobile phone. The user interface 41 is a dialog-driven editing page (i.e., a first interface) that is mainly used to present and obtain dialog content between a user and a system, and perform editing based on the dialog content to obtain target media content.

Referring to FIG. 4a, the user interface 41 includes a dialog window 301, a user preview area 302, an editing track 304, and a dialog input area 304. An image of a video editing frame of media content to be processed that is indicated by a preview pointer is displayed in the user preview area 302. The editing track 304 includes the preview pointer for indicating an editing position. Some operation suggestions, i.e., "Change an aspect ratio", "Add a package", "Add a copy intelligently", and "Replace a material", provided for the media content to be processed, are displayed in the dialog window 301. The dialog input area 304 is used to input user dialog information. The user may input the user dialog information in the dialog input area 304 based on the suggestions, to indicate an editing intention. As shown in FIG. 4a, assuming that the user wants to perform editing for "Change an aspect ratio", user dialog information "Change an aspect ratio" input by the user is displayed in the dialog input area 304 of the user interface 41.

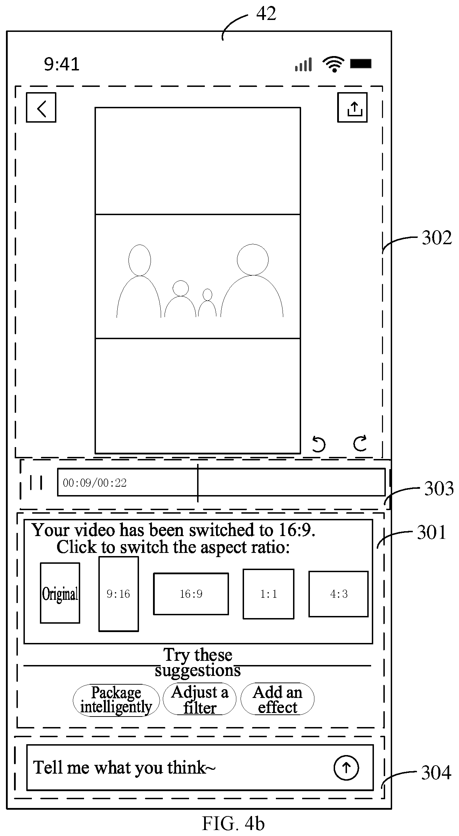

Referring to FIG. 4b, the system obtains the user dialog information "Change an aspect ratio", performs intention identification on the user dialog information, and determines, based on an editing intention obtained through identification, an operation control and an editing parameter for a current operation corresponding to the editing intention "Change an aspect ratio", to display the operation control in the dialog window. The editing parameter may be adjusted through a touch operation of the user on the operation control. As shown in FIG. 4b, system dialog information fed back by the system based on the user dialog information "Change an aspect ratio" input by the user is displayed in the dialog input area 304 of a user interface 42. The system dialog information includes the operation control for the current operation determined based on the editing intention of the user. The operation control includes a plurality of editing parameters such as candidate aspect ratios (Original, 9:16, 16:9, 1:1, and 4:3) for the user to select. A touch operation of the user on 9:16 is received, and as shown in FIG. 4a and FIG. 4b, the image frame in the editing effect preview area is switched from the original aspect ratio to the aspect ratio of 9:16.

In addition, suggestion information "Package intelligently", "Adjust a filter", and "Add an effect" for a next operation is further displayed below the system dialog information. The suggestion information may be determined by the system based on the editing intention of the user dialog information "Change an aspect ratio". In other words, based on the editing intention, both the operation control for the current operation and the recommendation information for the next operation are determined. Based on this, it is more advantageous for the user to perform subsequent editing efficiently.

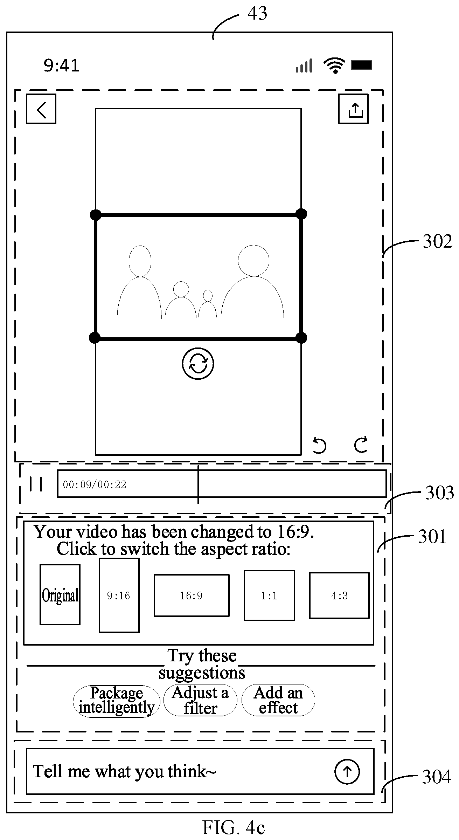

Referring to FIG. 4c, in order to help the user perform an editing operation on the image frame, an editing function may be provided in the editing effect preview area. As shown in FIG. 4c, a touch operation (a click or long-press) of the user on an image area in the editing effect preview area 302 of a user interface 43 is received, and the image area may be switched to a selected state in response to the touch operation.

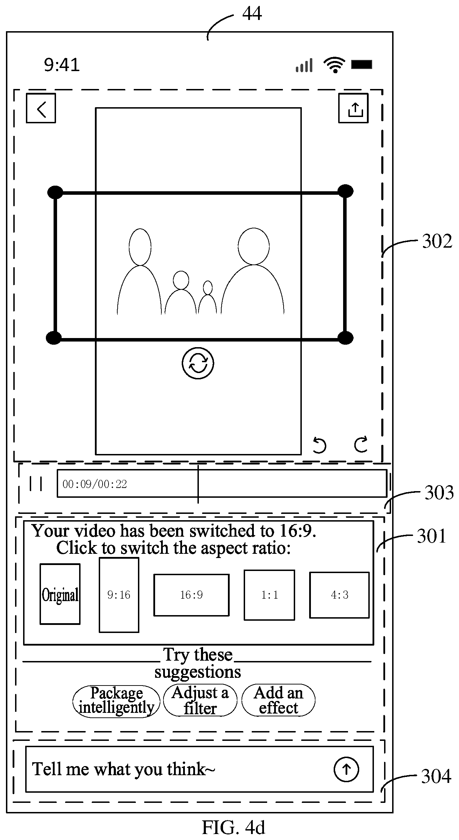

Referring to FIG. 4d, a touch operation (a click or drag) of the user on a selection box is received, and the image in the image area is enlarged based on an enlargement factor of the selection box in response to the touch operation. For example, an enlargement factor of the image may be fuzzily determined based on the enlargement factor of the selection box. For example, in a case, when the enlargement factor of the selection box is greater than 1, the image is enlarged by a preset factor of, for example, 1.1. In another case, the enlargement factor of the selection box is divided into a plurality of ranges, and different ranges correspond to different enlargement factors of the image. For example, enlargement factors 1 to 1.2 and enlargement factors 1.2 and 1.3 of the selection box respectively correspond enlargement factors 1.1 and 1.2 of the image.

FIG. 4b to FIG. 4d further include the user preview area 302, the editing track 304, and the dialog input area 304. For descriptions of the areas, reference may be made to FIG. 4a, and details are not described herein again.

It should be noted that the embodiment shown in FIG. 4a to FIG. 4d is merely an example of the media content processing method according to the embodiments of the present disclosure. In an actual scenario, a display manner and a presentation form of the dialog content, a setting manner of a related control for the dialog content, layouts and display parameters of some pages, and implementations of controls and entries can be flexibly set as required.

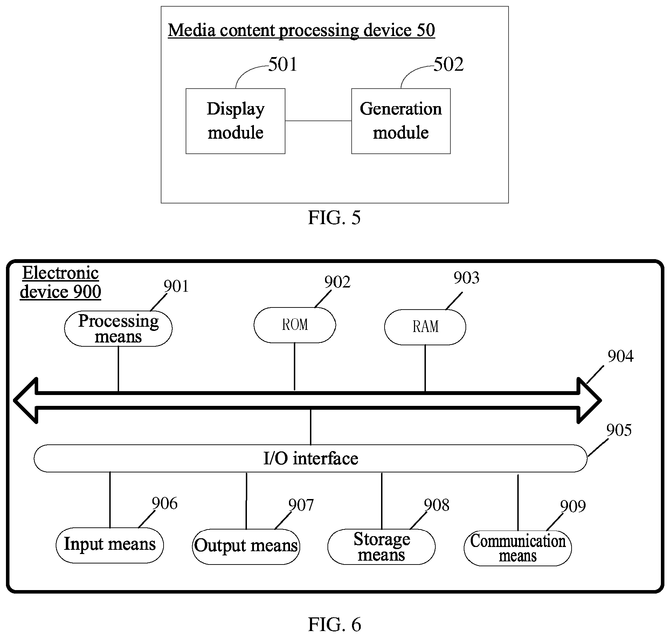

Corresponding to the media content processing method in the above embodiments, FIG. 5 is a structural block diagram of a media content processing device according to an embodiment of the present disclosure. For ease of illustration, only parts related to this embodiment of the present disclosure are shown. Referring to FIG. 5, the media content processing device 50 includes a display module 501 and an editing module 502.

The display module 501 is configured to display dialog content in a dialog window of a first interface, where the dialog content is used to indicate an editing intention of a user for media content to be processed, and the first interface includes an editing track, an editing effect preview area, and the dialog window, the editing track being configured to present a video clip formed based on the media content to be processed, and the editing effect preview area being configured to play the video clip formed based on the media content to be processed.

The generation module 502 is configured to edit the media content to be processed based on the dialog content to obtain target media content, where the target media content includes the media content to be processed and editing information, and the editing information is used to indicate an editing operation performed on the media content to be processed.

The display module 501 is further configured to present, on the editing track, a video clip formed based on the target media content.

In an embodiment of the present disclosure, the display module 501 is further configured to: display a target functional control within the first interface; and generate, in response to a touch operation acting on the target functional control, first user dialog information corresponding to the target functional control.

In an embodiment of the present disclosure, the dialog content includes second user dialog information, the first interface includes a dialog input area, and the display module 501 is further configured to obtain the second user dialog information in response to an input operation acting on the dialog input area.

In an embodiment of the present disclosure, the dialog content includes third user dialog information. The display module 501 is further configured to: display at least one piece of editing operation recommendation information within the first interface, where the editing operation recommendation information is determined based on the media content to be processed; and obtain the third user dialog information in response to an input operation that acts on the dialog input area and that is triggered based on at least one piece of prompt information.

In an embodiment of the present disclosure, the generation module 502 is specifically configured to: determine the editing intention based on the dialog content; determine an editing tool and an editing parameter based on the editing intention; and edit the media content to be processed through the editing tool based on the editing parameter.

In an embodiment of the present disclosure, the generation module 502 is specifically configured to: determine a first editing intention in the editing intention based on fourth user dialog information in the dialog content; determine, based on the first editing intention, an operation control and an editing parameter corresponding to the operation control; display the operation control in the dialog window of the first interface; and adjust the editing parameter in response to a touch operation acting on the operation control to obtain a target editing parameter, and edit the media content to be processed through the editing tool based on the target editing parameter.

In an embodiment of the present disclosure, the generation module 502 is specifically configured to: send the fourth user dialog information to a server, so that the server performs natural language processing on the fourth user dialog information to obtain a corresponding editing intention, assembles and generates an answer script based on the editing intention, and sends the answer script to a client, where the answer script includes a function and a parameter keyword corresponding to the function; receive the answer script; determine, based on the answer script, an operation control corresponding to the function; and determine a corresponding editing parameter based on the parameter keyword.

In an embodiment of the present disclosure, the generation module 502 is further configured to: determine recommendation information for a next editing operation based on the first editing intention; and display the recommendation information for the next editing operation in the dialog window of the first interface, so that the user inputs fifth user dialog information based on the recommendation information for the next editing operation, where the fifth user dialog information is used to indicate a second editing intention in the editing intention.

In an embodiment of the present disclosure, the generation module 502 is further configured to: present the media content to be processed on the editing track; obtain a current position of a preview pointer on the editing track, where the preview pointer is used to move along the editing track; determine an editing position of the media content to be processed based on the current position; and edit, based on the dialog content, a material in the media content to be processed that corresponds to the editing position.

In an embodiment of the present disclosure, the generation module 502 is further configured to: obtain a video material; present, on the editing track, a video clip formed based on the video material; and edit the video material based on the dialog content to obtain a video draft, where the video draft includes the video material and editing information, and the editing information is used to indicate an editing operation performed on the video material.

The device provided in this embodiment may be configured to perform the technical solution of the above method embodiment. The implementation principle and technical effects thereof are similar, and are not described herein again in this embodiment.

In order to implement the above-mentioned embodiments, an embodiment of the present disclosure further provides an electronic device.

Reference is made to FIG. 6, which is a schematic structural diagram of an electronic device 900 suitable for implementing an embodiment of the present disclosure. The electronic device 900 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and an in-vehicle terminal (such as a vehicle navigation terminal), and a fixed terminal such as a digital TV and a desktop computer. The electronic device shown in FIG. 6 is merely an example, and shall not impose any limitation on the function and scope of use of the embodiments of the present disclosure.

As shown in FIG. 6, the electronic device 900 may include a processing means (for example, a central processing unit or a graphics processing unit) 901 that may perform a variety of appropriate actions and processing based on a program stored in a read-only memory (ROM) 902 or a program loaded from a storage means 908 into a random-access memory (RAM) 903. The RAM 903 further stores various programs and data required for the operation of the electronic device 900. The processing means 901, the ROM 902, and the RAM 903 are connected to one another through a bus 904. An input/output (I/O) interface 905 is also connected to the bus 904.

Generally, the following apparatuses may be connected to the I/O interface 905: an input means 906 including, for example, a touchscreen, a touchpad, a keyboard, a mouse, a camera, a microphone, an accelerometer, and a gyroscope; an output means 907 including, for example, a liquid crystal display (LCD), a speaker, and a vibrator; the storage means 908 including, for example, a magnetic tape and a hard disk drive; and a communication means 909. The communication means 909 may allow the electronic device 900 to perform wireless or wired communication with other devices to exchange data. Although FIG. 6 shows the electronic device 900 having various means, it should be understood that it is not required to implement or have all of the shown means. It may be an alternative to implement or have more or fewer means.

In particular, according to an embodiment of the present disclosure, the process described above with reference to the flowchart may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded and installed from a network through the communication means 909, installed from the storage means 908, or installed from the ROM 902. When the computer program is executed by the processing means 901, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may alternatively be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that in some alternative implementations, the functions marked in the blocks may occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can alternatively be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A media content processing method, comprising:
displaying dialog content in a dialog window of a first interface, wherein the dialog content is used to indicate an editing intention of a user for media content to be processed, and the first interface comprises an editing track, an editing effect preview area, and the dialog window, the editing track being configured to present a video clip formed based on the media content to be processed, and the editing effect preview area being configured to play the video clip formed based on the media content to be processed;
editing the media content to be processed based on the dialog content to obtain target media content, wherein the target media content comprises the media content to be processed and editing information, and the editing information is used to indicate an editing operation performed on the media content to be processed; and
presenting, on the editing track, a video clip formed based on the target media content.

2. The method according to claim 1, wherein the dialog content comprises first user dialog information, and the method further comprises:
displaying a target functional control within the first interface; and
generating, in response to a touch operation acting on the target functional control, the first user dialog information corresponding to the target functional control.

3. The method according to claim 1, wherein the dialog content comprises second user dialog information, and the first interface comprises a dialog input area; and the method further comprises:
obtaining the second user dialog information in response to an input operation acting on the dialog input area.

4. The method according to claim 3, wherein the dialog content comprises third user dialog information, and the method further comprises:
displaying at least one piece of editing operation recommendation information within the first interface, wherein the editing operation recommendation information is determined based on the media content to be processed; and
obtaining the third user dialog information in response to an input operation that acts on the dialog input area and that is triggered based on the at least one piece of prompt information.

5. The method according to any one of claims 1 to 4, wherein editing the media content to be processed based on the dialog content comprises:
determining the editing intention based on the dialog content;
determining an editing tool and an editing parameter based on the editing intention; and
editing the media content to be processed through the editing tool based on the editing parameter.

6. The method according to claim 5, wherein the editing intention comprises a first editing intention, and determining the editing intention based on the dialog content comprises:
determining the first editing intention in the editing intention based on fourth user dialog information in the dialog content; and
determining, based on the first editing intention, an operation control and an editing parameter corresponding to the operation control; and
editing the media content to be processed through the editing tool based on the editing parameter comprises:
displaying the operation control in the dialog window of the first interface; and
adjusting the editing parameter in response to a touch operation acting on the operation control to obtain a target editing parameter, and editing the media content to be processed through the editing tool based on the target editing parameter.

7. The method according to claim 6, wherein determining the first editing intention in the editing intention based on the fourth user dialog information in the dialog content comprises:
sending the fourth user dialog information to a server, so that the server performs natural language processing on the fourth user dialog information to obtain a corresponding editing intention, assembles and generates an answer script based on the editing intention, and sends the answer script to a client, wherein the answer script comprises a function and a parameter keyword corresponding to the function; and
determining, based on the first editing intention, the operation control and the editing parameter corresponding to the operation control comprises:
receiving the answer script;
determining, based on the answer script, an operation control corresponding to the function; and
determining a corresponding editing parameter based on the parameter keyword.

8. The method according to claim 6, wherein the editing intention further comprises a second editing intention, and after determining the first editing intention in the editing intention based on the user dialog information in the dialog content, the method further comprises:
determining recommendation information for a next editing operation based on the first editing intention; and
displaying the recommendation information for the next editing operation in the dialog window of the first interface, so that the user inputs fifth user dialog information based on the recommendation information for the next editing operation, wherein the fifth user dialog information is used to indicate the second editing intention in the editing intention.

9. The method according to any one of claims 1 to 4, further comprising:
presenting the media content to be processed on the editing track;
obtaining a current position of a preview pointer on the editing track, wherein the preview pointer is used to move along the editing track; and
determining an editing position of the media content to be processed based on the current position,
wherein editing the media content to be processed based on the dialog content comprises:
editing, based on the dialog content, a material in the media content to be processed that corresponds to the editing position.

10. The method according to any one of claims 1 to 4, wherein the content to be processed is a video material; before displaying the dialog content in the dialog window of the first interface, the method further comprises:
obtaining the video material; and
presenting, on the editing track, a video clip formed based on the video material; and
editing the media content to be processed based on the dialog content to obtain the target media content comprises:
editing the video material based on the dialog content to obtain a video draft, wherein the video draft comprises the video material and editing information, and the editing information is used to indicate an editing operation performed on the video material.

11. A video processing device, comprising:
a display module configured to display dialog content in a dialog window of a first interface, wherein the dialog content is used to indicate an editing intention of a user for media content to be processed, and the first interface comprises an editing track, an editing effect preview area, and the dialog window, the editing track being configured to present a video clip formed based on the media content to be processed, and the editing effect preview area being configured to play the video clip formed based on the media content to be processed; and
an editing module configured to edit the media content to be processed based on the dialog content to obtain target media content, wherein the target media content comprises the media content to be processed and editing information, and the editing information is used to indicate an editing operation performed on the media content to be processed; and
the display module is further configured to present, on the editing track, a video clip formed based on the target media content.

12. An electronic device, comprising a processor and a memory,
wherein the memory stores computer-executable instructions; and
the processor executes the computer-executable instructions stored in the memory, to cause the processor to perform the media content processing method according to any one of claims 1 to 9.

13. A computer-readable storage medium storing computer-executable instructions that, when executed by a processor, cause the media content processing method according to any one of claims 1 to 9 to be implemented.

14. A computer program product, comprising a computer program that, when executed by a processor, causes the media content processing method according to any one of claims 1 to 9 to be implemented.
